# EUROPÄISCHE PATENTSCHRIFT

(11) **EP 2 757 164 B1**
(45) Veröffentlichungstag und Bekanntmachung des Hinweises auf die Patenterteilung: **23.05.2018**
(21) Anmeldenummer: 14150190.8
(22) Anmeldetag: 06.01.2014
(51) Int. Cl.: C21D 6/00, B60N 2/225, C21D 7/02, C21D 9/00, C21D 9/32, C22C 38/04, C22C 38/06

(54) **Hochtragfähige Verstelleinrichtung, insbesondere Sitzversteller auf FeMn-Basis**
High load bearing adjusting device, in particular seat adjuster on FeMn basis
Dispositif de réglage à forte capacité de charge, notamment dispositif de réglage de siège à base de FeMn

(30) Priorität: 16.01.2013 DE 102013000636
(43) Veröffentlichungstag der Anmeldung: 23.07.2014
(73) Patentinhaber: Volkswagen Aktiengesellschaft, 38440 Wolfsburg (DE); Sitech Sitztechnik GmbH, 38442 Wolfsburg (DE)
(72) Erfinder: Busch, Christian, 31552 Rodenberg (DE); Huinink, Stefan, 38165 Lehre (DE); Behm, Velten, 38442 Wolfsburg (DE); Gommert, Michael, 39606 Walsleben (DE); Barkow, Tomas, 38102 Braunschweig (DE)

(56) Entgegenhaltungen:
- WO-A1-2006/048034
- WO-A1-2007/075006
- WO-A1-2011/019904
- DE-A1-102005 017 929
- DE-A1-102010 018 602

## Beschreibung

Die Erfindung betrifft eine Verstelleinrichtung für einen Fahrzeugsitz, welcher mindestens ein aus einem hochmanganhaltigen Stahl bestehendes Beschlagteil umfasst, sowie ein zugehöriges Verfahren zur Herstellung des mindestens einen Beschlagteiles der Verstelleinrichtung.

Verstelleinrichtungen für Fahrzeugsitze umfassen zumeist ein erstes Beschlagteil und ein zweites Beschlagteil. Sie werden zusammenfassend als Sitzbeschläge oder Sitzversteller bezeichnet. Beispielsweise ist ein erstes Beschlagteil und ein hierzu relativ verdrehbares zweites Beschlagteil angeordnet. Das erste Beschlagteil ist beispielsweise fest mit einem Sitzteil verbunden. Das zweite Beschlagteil ist dann fest mit einer Rückenlehne verbunden. Das zweite Beschlagteil ist - zur Neigungsverstellung der Rückenlehne gegenüber dem Sitzteil - gegenüber dem ersten Beschlagteil schwenkbar, wobei die Beschlagteile über eine Achse schwenkbar miteinander verbunden sind. Die Beschlagteile weisen Verzahnungen oder zumindest Verzahnungsbereiche auf. Die Verzahnungen oder Verzahnungsbereiche werden durch eine ineinandergreifende Außenverzahnung und Innenverzahnung gebildet.

Bei der Herstellung der Beschlagteile stehen stets zwei wesentliche Aspekte im Mittelpunkt der Überlegungen und der technischen Weiterentwicklungen der Entwickler. Die Materialauswahl, die Erzeugung notwendiger und spezifischer Eigenschaften der Komponente (Verstelleinrichtung) oder von Teilkomponenten (Teile der Verstelleinrichtung) und das zugehörige Herstellungsverfahren.

Hinsichtlich der Materialauswahl ist es bekannt, Profilbauteile aus Stahl, Edelstahl oder aus Stahllegierungen auf Aluminium- und/oder Magnesiumbasis herzustellen. Derzeit werden neue Leichtbaumaterialien entwickelt und teilweise bereits als Massenware hergestellt.

Die Druckschrift DE 10 2004 061 284 A1 beispielsweise schlägt ein Verfahren zum Erzeugen von Warmbändern aus einem umformbaren, insbesondere gut kalt tiefziehfähigen Stahl vor. Der Stahl, bestehend aus den Hauptelementen Si, Al und Mn, weist eine hohe Zugfestigkeit sowie je nach Anforderung die so genannten TRIP- und/oder TWIP-Eigenschaften auf. Ein solcher TRIP- und/oder TWIP-Eigenschaften aufweisender Stahl ist unter der Markenbezeichnung "HSD"-Stahl (High Strength and Ductility) der Fa. Salzgitter Flachstahl GmbH bekannt geworden. Er zeichnet sich durch hohe Festigkeit und Duktilität aus. Der Stahl zeichnet sich ferner durch eine geringe Dichte aus, so dass gegenüber konventionellen Stählen bei gleichem Volumen ein geringeres Gewicht vorliegt. Die hochmanganhaltigen HSD-Stähle stellen durch ihre herausragenden mechanischen Eigenschaften eine neue Klasse von Stahlwerkstoffen dar.

Diese Eigenschaften werden durch den so genannten TRIP-Effekt und den TWIP-Effekt unterstützt.

Der TRIP-Effekt (Transformation Induced Plasticity) unterstützt die durch Kristallgitter-Transformation induzierte plastische Verformbarkeit bei gleichzeitig hoher Verfestigung des Stahles. Der so genannte TRIP-Stahl kann dadurch hohe Kräfte aufnehmen.

Seine extreme Dehnbarkeit erreicht der Stahl durch den TWIP-Effekt (Twinning Induced Plasticity), der durch Zwillingsbildung in der Kristallstruktur die Umformbarkeit verbessert. Der so genannte TWIP-Stahl dehnt sich bereits bei geringerer Spannung, reißt dafür aber erst bei einer Dehnung um die 90 Prozent. Dabei betragen nach der Druckschrift DE 10 2004 061 284 A1 die Gehalte in Masse-% eines Stahles C 0,04 bis 1,0; Al 0,05 bis 4,0; Si 0,05 bis 6,0; Mn 9,0 bis 30,0, wobei der Rest Eisen, einschließlich üblicher stahlbegleitender Elemente ist. Die Hauptelemente sind also Eisen (Fe) und Mangan (Mn).

Die Erzeugung dieser Stähle erfolgt beispielsweise durch das so genannte Bandgießen (DSC - Direct Strip Casting). Dabei wird die Schmelze eines TWIP- und/oder TRIP-Stahles auf eine Art Förderband gegossen. Dort wird die Schmelze endabmessungsnah sowie strömungsberuhigt und biegefrei zu einem Vorband vergossen und anschließend einer Weiterbehandlung zugeführt.

Stähle mit hohen Mangan-Gehalten eignen sich, wie aus dem Stand der Technik hervorgeht, auf Grund ihrer günstigen Eigenschaftskombination aus hohen Festigkeiten von bis zu 1400 MPa und extrem hoher Dehnbarkeit (Gleichmaßdehnungen von 45 % bis 50 % und Bruchdehnungen von 50 % bis 60 % werden erreicht) grundsätzlich im besonderen Maße für eine Verwendung im Bereich des Karosseriebaus.

Dieser Einsatzzweck wird auch für nur TWIP-Eigenschaften aufweisende Stähle mit den Hauptelementen Mn und Fe, mit hohen Mn-Gehalten von 6 Gew.-% bis 30 Gew.-% beispielsweise in der Druckschrift DE 197 27 759 C2 oder der Druckschrift DE 199 00 199 A1 vorgeschlagen.

Die aus den bekannten Stählen erzeugten Flachprodukte, wie Bänder und Bleche, weisen nach den Erläuterungen aus dem Stand der Technik bei hohen Festigkeiten ein gutes, insbesondere für den Karosseriebau auch vorteilhaftes isotropes Verformungsverhalten auf und sind darüber hinaus auch bei tieferen Temperaturen noch duktil.

Die sich auf die Druckschrift DE 10 2004 061 284 A1 beziehende Druckschrift
DE 10 2010 018 602 A1 schlägt bereits vor, dass Strukturbauteile einer Sitzstruktur eines Fahrzeugsitzes ebenfalls aus einem hochmanganhaltigen Stahl ausgebildet werden. Die Druckschrift DE 10 2010 018 602 A1 benennt dabei unter anderem als Strukturbauteil einen Beschlag. Ferner wird dort offenbart, dass durch Umformung profilartige Vertiefungen und/oder Erhebungen ausgebildet werden können, die dazu dienen, die Stabilität des jeweiligen Strukturbauteiles zu erhöhen. Es wird auch beschrieben, dass Öffnungen, Kragenzüge und Gewinde als Außen- oder Innengewinde vorgesehen sein können, wobei erläutert ist, dass die Öffnungen und die Kragenzüge bereits beim Umformen und das jeweilige Gewinde in den Öffnungen oder an dem Kragenzug in einem Nachbearbeitungsschritt ausgebildet werden.

Hinsichtlich der Herstellung von Beschlagteilen ist es aus der Druckschrift
DE 10 2009 014 115 A1 ferner allgemein bekannt, die Beschlagteile aus einem Warmband mit Feinschneiden zu fertigen, damit sie für die zu übertragenden Kräfte und Momente hinreichend belastbar und crashsicher sind. Es wird jedoch konventioneller Stahl verwendet, wodurch sich für die Beschlagteile in nachteiliger Weise ein relativ hohes Gewicht beziehungsweise eine entsprechend hohe Masse ergibt.

Wie die Druckschrift DE 10 2009 014 115 A1 weiter berichtet, wird bei gleicher Funktionalität ein gewichtsreduzierter Sitzbeschlag vorgeschlagen, dessen Beschlagteile nicht durch axiales Durchdrücken beziehungsweise Ausdrücken aus einem massiven Ausgangsrohteil, sondern als Blechumformteile hergestellt werden. Insbesondere erfolgt die Herstellung aus einem Ausgangsblech, aus dem zunächst Rohlinge ausgestanzt werden, wobei die Rohlinge nachfolgend durch Kaltumformung, z. B. in einer Kaltwalzanlage, topfförmig oder napfförmig mit einem radial inneren Kragen und einem radial äußeren Umfangsbereich ausgebildet werden, und in dem Umfangsbereich nachfolgend oder auch bereits während der Kaltverformung die jeweiligen Verzahnungsbereiche ausgebildet werden. Die Verzahnungsbereiche können insbesondere durch Einrollen beziehungsweise Kaltrollen, weiterhin auch durch Stanzen oder Prägen ausgebildet werden. Es wird allgemein erwähnt, dass durch die Kaltumformung eine entsprechende Versteifung der belasteten Bereiche des Innenteils und Außenteils möglich ist, wodurch die Festigkeit erhöht wird.

Der Erfindung liegt nun die Aufgabe zugrunde, eine Verstelleinrichtung für einen Fahrzeugsitz, insbesondere einen Sitzbeschlag, der zwischen Rückenlehne und Sitzteil angeordnet ist, zu schaffen, wobei die Verstelleinrichtung mittels eines zugehörigen kostengünstigen Herstellungsverfahrens bei geringem Gewicht eine hohe Tragfähigkeit aufweisen soll, und zudem in der Lage sein soll, hohe Drehmomente aufzunehmen und zu übertragen.

Ausgangspunkt der Erfindung ist eine Verstelleinrichtung für einen Fahrzeugsitz, welche mindestens ein aus einem hochmanganhaltigen Stahl bestehendes Beschlagteil umfasst.

Erfindungsgemäß ist vorgesehen, dass das Materialgefüge der mindestens einen Verzahnung des Beschlagteiles durch einen Kaltumformungsvorgang oder durch einen Feinschneidevorgang bearbeitet und lokal verfestigt wird, oder das Materialgefüge der mindestens einen Verzahnung des Beschlagteiles und/oder des mindestens einen Kragenzuges durch einen kombinierten Feinschneide- und Kaltumformungsvorgang bearbeitet und lokal verfestigt wird.

Die Verzahnungen und die Kragenzüge werden nachfolgend auch als spezifische Teilkomponenten bezeichnet.

Es hat sich in vorteilhafter Weise herausgestellt, dass hochmanganhaltige Stähle durch ihre Bearbeitung (Kaltumformung) in lokalen Bereichen besonders stark verfestigbar sind, so dass die so hergestellten verschiedenen spezifischen Teilkomponenten sehr hohe Steifigkeiten aufweisen. Sie können dadurch hohe Drehmomente aufnehmen und übertragen und weisen insgesamt eine hohe Tragfähigkeit auf. Durch die Verwendung von hochmanganhaltigem Stahl weisen die Beschlagteile insgesamt ein geringes Gewicht auf.

Anders gesagt wird ein gewichtsreduziertes Beschlagteil geschaffen, das mindestens eine spezifische Teilkomponente aufweist, dessen Materialgefüge lokal verfestigt ist.

In vorteilhafter Weise wird innerhalb des Herstellungsprozesses parallel zur Ausbildung der spezifischen Teilkomponente für eine lokale Verfestigung der spezifischen Teilkomponente gesorgt.

Entsprechende Ausführungsbeispiele sind in der Beschreibung näher erläutert.

In der Beschreibung ist in bevorzugter Ausgestaltung der Erfindung zusammenfassend erläutert, dass die mindestens eine spezifische Teilkomponente des Beschlagteiles eine Innenverzahnung und/oder eine Außenverzahnung und/oder mindestens ein Kragenzug ist.

Insbesondere über die Innen- und Außenverzahnung werden große Kräfte übertragen, so dass eine lokale Verfestigung im Verzahnungsbereich der zwei Beschlagteile eines Beschlages von besonderem Vorteil ist.

Die Ausbildung der Kragenzüge unter lokaler Verfestigung ist ebenfalls von besonderem Vorteil, da die Tragfähigkeit der Kragenzüge durch die lokale Verfestigung ebenfalls wesentlich erhöht wird.

Einige Beispiele gemäß den Eigenschaften der spezifischen Teilkomponenten:
Beispielsweise ist erfindungsgemäß vorgesehen, dass die Innenverzahnung und/oder Außenverzahnung eines Beschlagteiles durch Feinschneiden oder Kaltumformung oder durch eine Kombination von Feinschneiden und Kaltumformung ausgebildet und gleichzeitig lokal verfestigt wird.

Beispielsweise wird ein Kragenzug eines Beschlagteiles durch Feinschneiden oder durch eine Kombination von Feinschneiden und Kaltumformung ausgebildet und lokal verfestigt.

Das zugehörige Verfahren zur lokalen Verfestigung des Materialgefüges des zugehörigen Bearbeitungsbereiches unter gleichzeitiger Ausbildung der mindestens einen spezifischen Teilkomponente erfolgt durch die nachfolgend genannten Bearbeitungsschritte:
Die Verfahrensschritte sind in vorteilhafter Weise für eine Massenproduktion der aus hochmanganhaltigem Stahl vorgefertigten Beschlagteile (Rohlinge) geeignet.

Weitere bevorzugte Ausgestaltungen der Erfindung ergeben sich aus den übrigen, in den Unteransprüchen und in der Beschreibung genannten Merkmalen.

Die Erfindung wird nachfolgend in Ausführungsbeispielen anhand der zugehörigen Zeichnungen erläutert. Es zeigen:
- Figur 1A: eine Verstelleinrichtung (Beschlag) in einer Seitenansicht mit Adapterplatten;
- Figur 1B: ein erstes Beschlagteil (Hohlrad) in mehreren Abbildungen zur Verdeutlichung der Verfahrensschritte innerhalb eines Herstellungsprozesses vom Beschlagteil-Rohling zum fertigen Beschlagteil;
- Figur 1C: ein zweites Beschlagteil (Stirnrad) in mehreren Abbildungen zur Verdeutlichung der Verfahrensschritte innerhalb eines Herstellungsprozesses vom Beschlagteil-Rohling zum fertigen Beschlagteil;
- Figur 2A: die Beschlagteile im Zusammenbauzustand in einer Seitenansicht gemäß Figur 1A;
- Figur 2B: die Beschlagteile im Zusammenbauzustand in einer perspektivischen Ansicht gemäß Figur 1A;
- Figur 3A: eine Vorderseite des ersten Beschlagteiles (Hohlrad) in einer perspektivischen Darstellung;
- Figur 3B: eine Rückseite des ersten Beschlagteiles (Hohlrad) in einer perspektivischen Darstellung;
- Figur 3C: einen vergrößerten Ausschnitt der Rückseite des ersten Beschlagteiles (Hohlrad) in einer perspektivischen Darstellung;
- Figur 4A: eine Vorderseite des zweiten Beschlagteiles (Stirnrad) in einer perspektivischen Darstellung;
- Figur 4B: ein zu Figur 4A gehörendes erstes Diagramm eines Härteverlaufes in Abhängigkeit eines Abstandes von einer Ziehkante eines zweiten Kragenzuges des zweiten Beschlagteiles;
- Figur 5A: die Vorderseite des zweiten Beschlagteiles (Stirnrad) in einer perspektivischen Darstellung; und
- Figur 5B: ein zu Figur 5A gehörendes zweites Diagramm mit zwei Kennlinien, jeweils eines Härteverlaufes in Abhängigkeit eines Abstandes von einer Scherkante einer Außenverzahnung des zweiten Beschlagteiles.

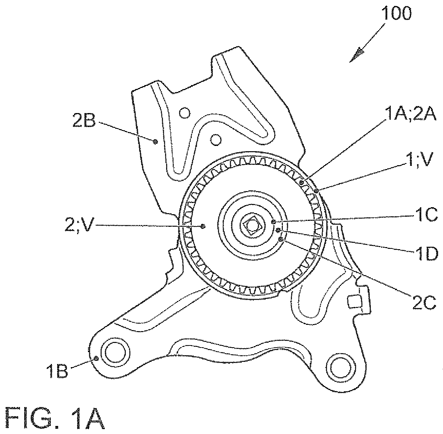

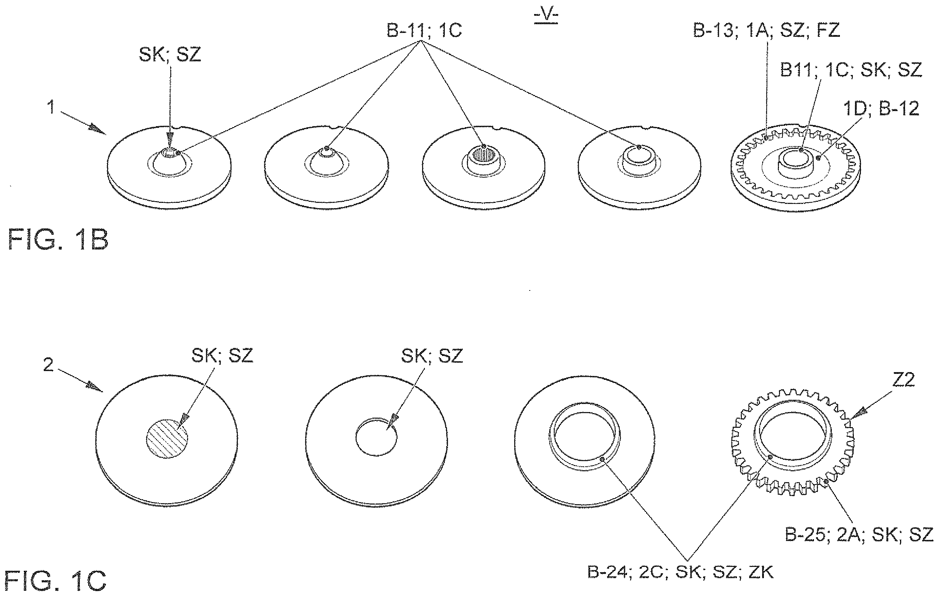

Die Darstellung eines prinzipiellen Aufbaus einer Verstelleinrichtung 100 gemäß den Figuren 1A, 1B und 1C ist nur als Beispiel zu verstehen. Die Zuordnung von Außen- und Innenverzahnung beziehungsweise die Zuordnung zum Sitzteil beziehungsweise zur Rückenlehne kann auch in anderer Weise erfolgen.

Die Verstelleinrichtung 100, die zumeist kurz als Beschlag bezeichnet wird, umfasst ein erstes festes Beschlagteil 1 und ein hierzu relativ verdrehbares zweites Beschlagteil 2. Das erste Beschlagteil 1 ist gemäß dem hier vorliegenden Anwendungsfall im Ausführungsbeispiel über eine erste Adapterplatte 1B fest mit einem nicht näher dargestellten Sitzteil verbunden.

Das zweite Beschlagteil 2 ist gegenüber dem ersten festen Beschlagteil 1 schwenkbar. Das zweite schwenkbare Beschlagteil 2 ist im Ausführungsbeispiel ebenfalls über eine zweite Adapterplatte 2B fest mit einer ebenfalls nicht näher dargestellten Rückenlehne verbunden.

Das erste feste Beschlagteil 1 (Hohlrad) weist beispielsweise eine Innenverzahnung 1A und das zweite schwenkbare Beschlagteil 2 (Stirnrad) weist eine Außenverzahnung 2A auf, wobei die Verzahnungen 1A, 2A ineinandergreifen und zusammenwirken.

Jedes der Beschlagteile 1, 2 umfasst ferner einen in axialer Richtung hervorstehenden Kragen, einen so genannten Kragenzug 1C, 2C, welcher jeweils in einem Feinschneideprozess und einem Kaltumformverfahren hergestellt wird, worauf nachfolgend noch näher eingegangen wird.

Der angeformte Kragenzug 1C des ersten festen Beschlagteiles 1 dient beispielsweise der Lagerung von Komponenten der Verstelleinrichtung, beispielsweise der Lagerung einer Mitnehmerbuchse, die jedoch nicht näher dargestellt ist.

Beispielsweise stützen sich auf der Außenfläche des ersten Kragenzuges 1C ebenfalls nicht näher dargestellte Keilsegmente mit ihren Innenflächen ab, die sich mit ihren Außenflächen an einer Innenfläche eines im zweiten schwenkbaren Beschlagteil 2 fixierten Lagerrings, der als zweiter Kragenzug 2C ausgebildet ist, in Berührung stehen. Insofern sind die Kragenzüge 1C, 2C allgemein Lager- und Tragkomponenten, weshalb ihre Tragfähigkeit, mithin ihre Steifigkeit von besonderer Bedeutung sind.

Der Aufbau der Verstelleinrichtung 100 kann wie erwähnt von Beschlag zu Beschlag unterschiedlich sein. Ein wesentlicher Aspekt der Erfindung besteht zunächst darin, dass die Beschlagteile 1, 2 aus einem hochfesten, hochmanganhaltigen Stahl bestehen.

Vorgeschlagen werden insbesondere folgende hochfeste und hochmanganhaltige Stähle.

Unter Nennung der weiteren chemischen Elemente wird die Verwendung von hochfesten und hochmanganhaltigen Stählen vorgeschlagen, die in Gewichts-% als erstes Hauptelement Mn: 7,00-30,00% und die Nebenelemente C: 0,04 - 1,00%, Al: 0,00-10,00%, Si: 0,05-8,00%, B: < 0,01%, Ni: < 8,00%, Cu: < 3,00%, N: < 0,60%, Nb: < 0,30%, Ti: < 0,30%, V: < 0,30%, P: < 0,01% und den Rest als weiteres, zweites Hauptelement Eisen (Fe) sowie unvermeidbare Verunreinigungen enthalten.

In bevorzugter Ausgestaltung werden drei Stähle mit der in der Tabelle 1 angegebenen chemischen Zusammensetzung mit den durch die Zusammensetzung erreichten physikalischen Eigenschaften vorgeschlagen. Die dort nicht genannten chemischen Elemente liegen in den zuvor genannten Wertebereichen.

**Tabelle 1:**

| | | | |
|---|---|---|---|
| Zusammensetzung in Gew.-% | C:0,7 | C: 0,5 | C: 0,4 |
| | Mn: 15 | Mn: 12 | Mn: 19 |
| Fe: Rest | Al: 2,5 | Al: 2 | Al: 1,2 |
| | Si: 2,5 | | Cr: 1,7 |
| | | | V: 0,12 |
| Werkstoffbezeichnu ng | X70MnAlSi-15-2,5-2,5 (HSD) | X50MnAlSi-12-2 | X40MnAlCrV-19-1,2-1,7-0,12 |
| E [GPa] | ∼180 | ∼170-190 | ∼190-200 |
| Rp0,2 [MPa] | 600 | 500 | 500 |
| Rm [MPa] | 1000 | 950 | 930 |
| A80 [%] | 50-60 | 50-60 | 45 |
| ρ [g/cm³] | 7,4 | - | - |

Die vorgeschlagenen hochmanganhaltigen FeMn-Stähle stellen nur Beispiele dar, die Aufzählung ist nicht vollständig und die Erfindung ist nicht auf die genannten hochmanganhaltigen FeMn-Stähle beschränkt. Wesentlich ist die Verwendung der hochmanganhaltigen FeMn-Stähle als Grundwerkstoff für die Beschlagteile 1, 2 des Beschlages 100 (Endprodukt) und die Herstellung und Bearbeitung der Beschlagteile, wie nachfolgend näher erläutert wird.

Die Verwendbarkeit der genannten hochfesten, hochmanganhaltigen Stähle für Beschlagteile wurde für den normalen Betrieb und für den Crashfall berechnet und getestet.

Bei diesen Berechnungen und Tests wurde die notwendige Festigkeit - auch für den Crashfall - in Abhängigkeit einer notwendigen Blechstärke ermittelt.

Die Verwendung einiger der genannten hochfesten, hochmanganhaltigen Stähle für einen Beschlag 100, mithin für die Beschlagteile 1, 2, ist wie bereits erwähnt aus der Druckschrift DE 10 2010 018 602 A1 der Anmelderin bekannt.

Erfindungsgemäß wird durch eine spezielle Herstellung und Bearbeitung der aus einem hochmanganhaltigen FeMn-Stahl hergestellten Beschlagteil-Rohlinge (Halbzeuge) ein neues Endprodukt geschaffen, welches überraschenderweise vorteilhafte Eigenschaften aufweist, die nachfolgend erläutert werden.

Die Beschlagteil-Rohlinge werden zur Erzeugung der gewünschten Eigenschaften erfindungsgemäß in einem Verfahren folgendermaßen bearbeitet:
Gemäß der Beschreibung der nachfolgenden Figuren wird das mindestens eine Beschlagteil 1, 2 der Verstelleinrichtung 100 unter Ausbildung seiner spezifischen Form/en und unter lokaler Verfestigung in mindestens einem Bearbeitungsbereich B-n feingeschnitten und in einem Kaltumformprozess durch Kaltumformung umgeformt oder nur durch Kaltumformung umgeformt oder nur feingeschnitten.

Die Beschlagteil-Rohlinge bestehen aus einem hochmanganhaltigen FeMn-Stahl. Der Vorteil bei der Verwendung von hochmanganhaltigen FeMn-Stählen besteht darin, dass konventionelle höherfeste Stähle zwar hohe Zugfestigkeiten bis zu 1100 MPa aufweisen, jedoch ist deren Bruchdehnung und deren Umformvermögen eher gering.

Hochmanganhaltige FeMn-Stähle sind dagegen bei hoher Bruchdehnung und gutem Umformvermögen noch hochfest. Sie sind in vorteilhafter Weise hochduktil, das heißt, sie besitzen die Eigenschaft, dass sie sich unter Belastung plastisch gut verformen lassen. Diese Eigenschaft besitzen die höherfesten konventionellen Stähle nicht.

### Erstes Beschlagteil 1 (Hohlrad):

Das erste feste Beschlagteil 1 wird zur Bewirkung lokaler Verfestigungsstrukturen im Material des ersten Beschlagteiles gemäß den Abbildungen der Figur 1B - von links nach rechts gesehen - in folgenden Umformstufen bearbeitet:
Erster Schritt: Zunächst erfolgt in axialer Richtung bezogen auf die Mittelachse des ersten Beschlagteiles 1 ein Vorlochen des kreisrunden Rohlings durch einen Feinschneidevorgang. Das Feinschneiden gehört nach DIN 8580 (VDI 3345,VDI 2906 Blatt 5) zur Gruppe der Scherschneidverfahren mit geschlossener Schnittlinie.

Hierdurch wird in vorteilhafter Weise im Materialgefüge hinter einer Schneidkante SK - in der so genannten Scherzone SZ - bereits eine lokale Verfestigung des hochmanganhaltigen FeMn-Stahles eines im nachfolgenden Schritt kalt ausgeformten Domes hervorgerufen. Ein besonderer Vorteil des Feinschneideprozesses ist die Möglichkeit, die Schnittflächen von durch das Feinschneiden ausgebildeten Funktionsteilen über die gesamte Dicke - ohne jede Nachbearbeitung - ein- und abrissfrei glatt zu gestalten. Dies ist bei anderen Trennverfahren wie dem normalen Stanzen, aber auch dem Konterschneiden oder dem Laserschneiden nicht der Fall.

Zweiter Schritt: Anschließend wird in dem ersten Beschlagteil 1 in axialer Richtung ein zentrisch des Beschlagteiles 1 angeordneter Dom geformt, der schließlich den ersten Kragenzug 1C ausbildet.

In einer nicht näher dargestellten Ausführungsvariante ist ein dem zweiten Schritt folgender Zwischenschritt vorgesehen, der darin besteht, den oberen Rand des ersten Kragenzuges 1C in Abhängigkeit der Wanddicke des ersten Kragenzuges 1C nach dem Domformen beziehungsweise dem Kragenziehen des Kragenzuges 1C winklig zu stellen. Durch die Winkligstellung des oberen Randes des ersten Kragenzuges 1C gegenüber dem restlichen Bereich des Kragens, beispielsweise um 60°, 90° oder sogar 180° kommt es zusätzlich allein durch die neue geometrische Form des ersten Kragenzuges 1C zu einer Erhöhung der Steifigkeit des ersten Kragenzuges 1C. Durch die Winkligstellung entsteht am oberen Rand des Kragenzuges 1C ein Bord, der als Außenbord oder als Innenbord ausgebildet ist, das heißt, der Bord wird je nach der gewünschten Gradzahl der Winkligstellung nach außen oder innen gebördelt beziehungsweise umgebogen. Die Winkligstellung erfolgt durch Bördeln nach DIN 8582 oder durch Freies Biegen nach DIN 8586. Darüber hinaus kommt es neben der Erhöhung der Steifigkeit durch die neue geometrische Form des ersten Kragenzuges 1C durch den zusätzlich durchgeführten Kaltumformungsschritt zu einer zusätzlichen Verfestigung des aus dem hochmanganhaltigen FeMn-Stahl hergestellten ersten Kragenzuges 1C.

Durch das Kaltumformen des Domes kommt es im Materialgefüge des ersten Kragenzuges 1C ebenfalls zu einer lokalen Verfestigung.

Mit anderen Worten, es wurde herausgefunden, dass es im Materialgefüge beim Feinschneiden von hochmanganhaltigen FeMn-Stählen und beim Umformen von hochmanganhaltigen FeMn-Stählen, gemäß dem ersten und zweiten Schritt bei der Ausbildung einer spezifischen Teilkomponente eines Beschlagteiles jeweils zu einer lokalen Verfestigung im Materialgefüge der Teilkomponente kommt. Als erste spezifische Teilkomponente wird somit der erste Kragenzug 1C des ersten Beschlagteiles 1 geschaffen, dessen aus hochmanganhaltigem FeMn-Stahl bestehendes Materialgefüge durch Feinschneiden und Kaltumformen schrittweise lokal verfestigt worden ist.

Es findet somit schrittweise eine gezielte lokale Kaltverfestigung in einem ersten Bearbeitungsbereich B-11 des Beschlages 100 statt, mit dem Ergebnis, dass das aus dem hochmanganhaltigen FeMn-Stahl ausgebildete erste Beschlagteil 1 als erste spezifische Teilkomponente einen hochfesten ersten Kragenzug 1C aufweist, welcher durch das Feinschneiden des Vorloches und in Kombination dazu durch die Ausbildung und Umformung des Domes eine hohe Härte aufweist, die über die hohe Härte des Grundwerkstoffes, des hochmanganhaltigen FeMn-Stahles noch hinausgeht. Die so erreichte höhere Härte geht mithin auch über die Härte konventionell verwendeter nicht hochmanganhaltiger Stähle hinaus.

Bei einer Härte des Rohlings im unverformten Grundwerkstoff von ca. 260 HV 0,1 [Vickershärte - Prüfung an ebenen Oberflächen nach DIN EN ISO 6507-1 HV 0,1 - Prüfkraft 0,9807N] kann diese im Feinschneideprozess (erster Schritt - Vorlochen mittels Feinschneiden) auf mehr als das Doppelte, auf ca. 550-600 HV 0,1 gesteigert werden. In Kombination mit einem Kaltumformprozess (zweiter Schritt - Ausformung des Domes) können lokal Härtewerte von bis zu 800 HV 0,1 erreicht werden. In vorteilhafter Weise kann dadurch auf einen Wärmebehandlungsprozess, wie z. B. ein Einsatzhärten durch Kohlenstoffeinlagerung der zu härtenden Komponente verzichtet werden.

Während des zweiten Schrittes wird beispielsweise im ersten Beschlagteil 1 zudem eine den ersten Kragenzug 1C umgebende Sicke 1D durch herkömmliche Kaltumformung vorgesehen.

Die Sicke 1D wird als zweite spezifische Teilkomponente, die zur Versteifung des ersten Beschlagteiles 1 dient, angesehen. Es findet eine gezielte lokale Kaltverfestigung herkömmlicher Art in einem zweiten Bearbeitungsbereich B-12 statt. Durch diese geometrische Umformung wird der Bereich um den ersten Kragenzug 1C herum lokal verfestigt.

Dritter Schritt: Nach dem Domformen (erster und zweiter Schritt) des ersten Kragenzuges 1C erfolgt ein kombinierter Feinschneide- und Durchsetzfügevorgang, wodurch die Innenverzahnung 1A des ersten Beschlagteiles 1 ausgebildet wird. Der Feinschneid- und Durchsetzfügevorgang stellt ebenfalls einen Feinschneide- und Kaltumformprozess dar, durch den eine lokale Verfestigung des durch das Feinschneiden und Durchsetzfügen belasteten Materialgefüges des hochmanganhaltigen FeMn-Stahles in einer so genannten Scher- und Fügezone SZ/FZ stattfindet.

Die Innenverzahnung 1A des ersten Beschlagteiles stellt somit eine dritte spezifische Teilkomponente dar, die gezielt in einem dritten Bearbeitungsbereich B-13, insbesondere mittels des Feinschneide- und Durchsetzfügevorgangs in der Scher- und Fügezone SZ/FZ lokal verfestigbar ist.

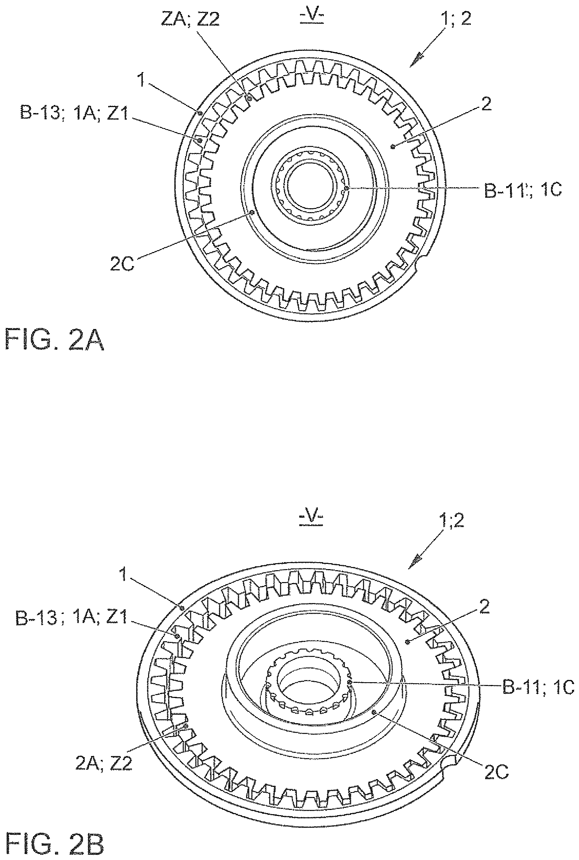

Zur Verdeutlichung eines weiteren Aspektes der Erfindung wird die Innenverzahnung 1A des ersten Beschlagteiles 1 gemäß Figur 1A auch in Figur 2A als vergrößerte Seitenansicht und in Figur 2B als perspektivische Darstellung im Zusammenbauzustand mit dem zweiten Beschlagteil 2 und dessen Außenverzahnung 2A gezeigt. Diese Ansicht wird für die nachfolgende Erläuterung als Vorderseite V der Beschlagteile 1, 2 definiert.

Die Verformungs- und Bearbeitungsbereiche B-11 und B-12 sind an zugehörigen spezifischen Teilkomponenten 1C (erster Kragenzug), 1D (herkömmliche kaltumgeformte Sicke) in den Figuren 2A, 2B ebenfalls entsprechend angetragen.

Die Vorderseite V des ersten Beschlagteiles 1, im Ausführungsbeispiel das Hohlrad, wird in Figur 2A, 2B durch das zweite Beschlagteil 2 mit seiner Innenverzahnung 2A verdeckt, welches im Ausführungsbeispiel als Stirnrad ausgebildet ist. Die Außenverzahnung 2A des zweiten Beschlagteiles 2 liegt in die Innenverzahnung 1A des ersten Beschlagteiles 1 eingreifend in der Ebene der Innenverzahnung 1A des ersten Beschlagteiles 1.

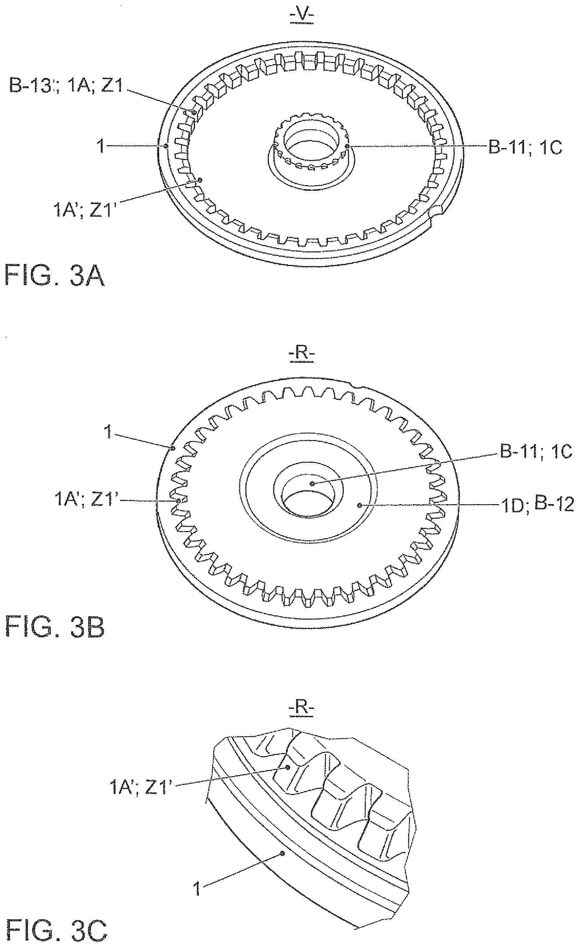

Die Zähne Z1 der Innenverzahnung 1A sind erfindungsgemäß durch den Feinschneid- und Durchsetzfügevorgang geometrisch auf besondere Weise ausgebildet, wie die Figuren 3A bis 3C noch besser zeigen.

Figur 3A zeigt die Vorderseite V des ersten Beschlagteiles 1 in einer perspektivischen Darstellung ohne das zweite Beschlagteil 2. Figur 3B zeigt die Rückseite R des ersten Beschlagteiles 1 ebenfalls in einer perspektivischen Darstellung. Figur 3C zeigt einen perspektivisch dargestellten vergrößerten Ausschnitt des ersten Beschlagteiles 1 mit der Rückseite R der Innenverzahnung 1A.

Aus den Figuren 3A bis 3C wird deutlich, dass die Innenverzahnung 1A mittels Feinschneiden aus den mehreren Zähnen Z1 ausgebildet ist. Die Innenverzahnung 1A liegt im Zusammenbauzustand des Beschlages in der Ebene der Außenverzahnung 2A.

Zudem wird als weiterer Aspekt der Erfindung durch das Durchsetzfügen eine Sekundärverzahnung 1A' gebildet, die im Zusammenbauzustand nicht in der Ebene der Außenverzahnung 2A des zweiten Beschlagteiles 2 angeordnet ist, sondern in einer parallelen Ebene dazu angeordnet ist.

Die Sekundärverzahnung 1A' wird in Richtung der Kraft des Durchsetzfügens in das Material des ersten Beschlagteiles 1 (gemäß Figur 3A in die Blattebene) hinein gedrückt. Dabei bildet sich in dem ersten Beschlagteil 1 eine Art in axialer Richtung ausgeformter Trog mit der stirnseitig des Troges angeordneten Sekundärverzahnung 1A', die auf der Rückseite R des ersten Beschlagteiles 1 als eine Art Außenverzahnung mit Zähnen Z1' ausgebildet ist.

Die Außenverzahnung mit den Zähnen Z1' der Sekundärverzahnung 1A' geht, wie die Figuren 3B und 3C zeigen, durch den kombinierten Feinschneide- und Durchsetzfügevorgang in axialer und radialer Richtung in die Innenverzahnung 1A des ersten Beschlagteiles über.

Durch diese Vorgehensweise kommt es zu einer geometrischen Struktur des ersten Beschlagteiles 1, die in vorteilhafter Weise noch zusätzlich die Steifigkeit des ersten Beschlagteiles 1 erhöht.

Man spricht von einer so genannten "geometrischen Versteifung" des Beschlagteiles 1 im Verzahnungsbereich (Primärinnenverzahnung 1A und Sekundärverzahnung 1A' des ersten Beschlagteiles 1 und die Außenverzahnung 2A des zweiten Beschlagteiles 2).

Das Materialgefüge der Sekundärverzahnung 1A' ist durch den Feinschneide- und Durchsetzfügevorgang in der Scherzone SZ (Feinschneidevorgang) und der Fügezone FZ (Durchsetzfügevorgang) im Scher- und Fügebereich (siehe Figur 1B, rechte Abbildung) ebenfalls lokal verfestigt, so dass die Bauteilsteifigkeit in diesen Bereichen zusätzlich zur "geometrischen Versteifung" weiter erhöht wird.

### Zweites Beschlagteil 2 (Stirnrad):

Das zweite schwenkbare Beschlagteil 2 wird zur Bewirkung lokaler Verfestigungsstrukturen gemäß den Abbildungen der Figur 1C von - links nach rechts gesehen - in folgenden Umformstufen bearbeitet:
Erster Schritt: Zunächst erfolgt in axialer Richtung bezogen auf die Mittelachse ein Vorlochen, ebenfalls mittels eines Feinschneidevorgangs, des ansonsten bereits als kreisrunder Rohling vorliegenden zweiten Beschlagteiles 2. Dadurch findet im Materialgefüge hinter der Schneidkante SK - in der so genannten Scherzone SZ - bereits eine lokale Verfestigung des hochmanganhaltigen FeMn-Stahles statt. Die Vorteile wurden bereits im Zusammenhang mit dem Vorlochen des ersten Beschlagteiles 1 erläutert.

Zweiter Schritt: Nach dem Vorlochen erfolgt ein zentrisches axiales Kragenziehen, wodurch der als vierte spezifische Teilkomponente des Beschlages 100 verfestigte zweite Kragenzug 2C des zweiten Beschlagteiles 2 in einem vierten Bearbeitungsbereich B-24 ausgebildet wird.

Mit anderem Worten kommt es durch Kaltumformung und Ausbildung des zweiten Kragenzuges 2C mittels Kragenziehen im Materialgefüge des zweiten Kragenzuges 2C ebenfalls zu einer lokalen Verfestigung. In vorteilhafter Weise kommt es bei dem Kragenziehen zur Verfestigung in dem vierten lokalen Bearbeitungsbereich B-24 des Beschlages 100. In dem vierten lokalen Bearbeitungsbereich B-24 wird die vierte spezifische Teilkomponente, nämlich der durch die Kombination der Verfahrensschritte von Feinschneiden und Kaltumformung ausgebildete zweite Kragenzug 2C des zweiten Beschlagteiles 2, mit hoher Härte aus einem hochmanganhaltigen Stahl geschaffen.

Die lokale Verfestigung findet durch das Feinschneiden (erster Schritt) in der Scherzone SZ des Materialgefüges und durch Kaltumformung in dem durch das Kragenziehen (zweiter Schritt) beeinflussten Materialgefüge einer Ziehkante ZK statt. Die lokale Verfestigung findet zum einen im Materialgefüge nahe des zweiten Kragenzuges 2C statt, welches sich in der Ebene des zweiten Beschlagteiles 2 befindet. Zum anderen erfolgt eine lokale Verfestigung im Materialgefüge der Ziehkante ZK des durch Kaltumformung ausgeformten zweiten Kragenzuges 2C selbst.

Zu den Vorteilen wurde bereits ausgeführt. Bei einer Härte des Rohlings im unverformten Grundwerkstoff von ca. 260 HV 0,1 [Vickershärte - Prüfung an ebenen Oberflächen nach DIN EN ISO 6507-1 HV 0,1 - Prüfkraft 0,9807N] kann die Härte im Feinschneideprozess (erster Schritt - Vorlochen mittels Feinschneiden) auf mehr als das Doppelte, auf ca. 550-600 HV 0,1 gesteigert werden. In Kombination mit einem Kaltumformprozess (zweiter Schritt - Ausformung des Kragenzuges 2C mittels Kragenziehen) werden lokal Härtewerte von bis zu 800 HV 0,1 erreicht. In vorteilhafter Weise kann auf einen Wärmebehandlungsprozess, wie z. B. das Einsatzhärten durch Kohlenstoffeinlagerung der zu härtenden Komponente verzichtet werden.

Auch für den zweiten Kragenzug 2C ist in einer ebenfalls nicht näher dargestellten Ausführungsvariante ein dem zweiten Schritt folgender Zwischenschritt vorgesehen, der darin besteht, den oberen Rand des zweiten Kragenzuges 2C in Abhängigkeit der Wanddicke des zweiten Kragenzuges 2C nach dem Domformen beziehungsweise dem Kragenziehen des zweiten Kragenzuges 2C winklig zu stellen. Durch die Winkligstellung des oberen Randes des zweiten Kragenzuges 2C gegenüber dem restlichen Bereich des Kragens, beispielsweise um 60°, 90° oder sogar 180°, kommt es zusätzlich allein durch die neue geometrische Form des zweiten Kragenzuges 2C zu einer Erhöhung der Steifigkeit des zweiten Kragenzuges 2C. Durch die Winkligstellung entsteht am oberen Rand des zweiten Kragenzuges 2C ein Bord, der als Außenbord oder als Innenbord ausgebildet ist, das heißt, der Bord wird je nach der gewünschten Gradzahl der Winkligstellung nach außen oder innen gebördelt beziehungsweise umgebogen. Die Winkligstellung erfolgt durch Bördeln nach DIN 8582 oder durch Freies Biegen nach DIN 8586. Darüber hinaus kommt es neben der Erhöhung der Steifigkeit durch die neue geometrische Form des zweiten Kragenzuges 2C durch den zusätzlich durchgeführten Kaltumformungsschritt zu einer zusätzlichen Verfestigung des aus dem hochmanganhaltigen FeMn-Stahl hergestellten zweiten Kragenzuges 2C.

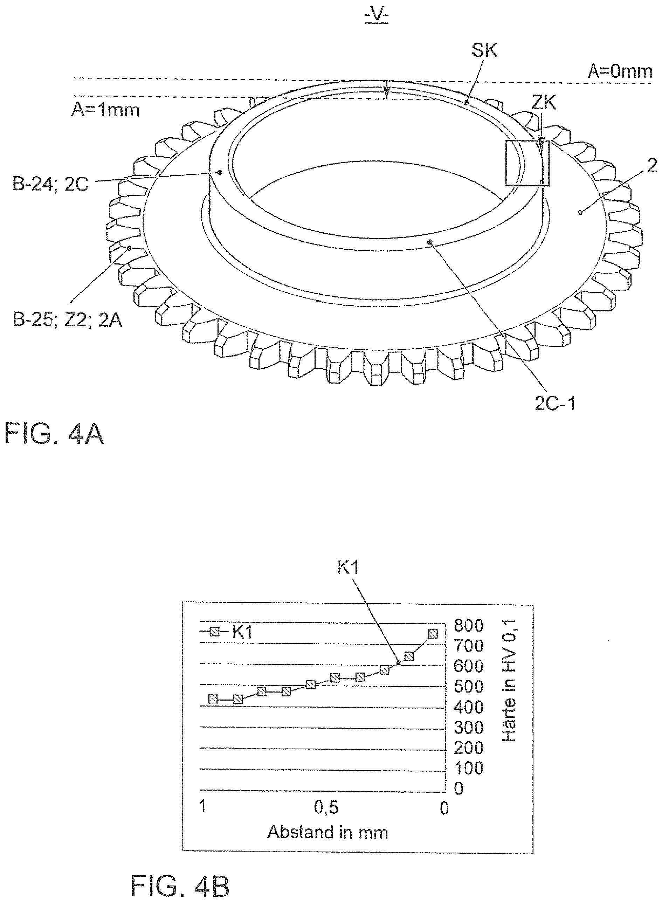

Die zu erreichende Härte, in Abhängigkeit des Abstandes von der Stirnfläche 2C-1 des zweiten Kragenzuges 2C, in radialer Richtung zur Mittelachse des zweiten Beschlagteiles 2 gesehen, wird später mittels der Figuren 4A, 4B anhand eines Diagrammes (Figur 4B) veranschaulicht.

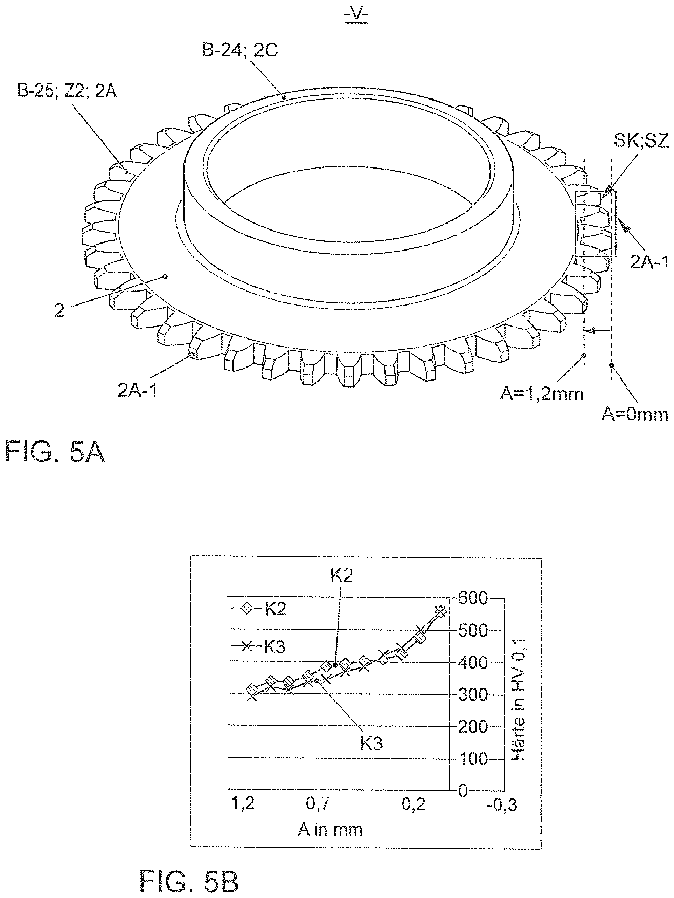

Dritter Schritt: Anschließend oder parallel zum Vorlochen und Kragenziehen des zweiten Kragenzuges 2C erfolgt ein Feinschneiden der Zähne Z2 des Verzahnungsbereiches in einem fünften Bearbeitungsbereich B-25, im Ausführungsbeispiel der Außenverzahnung 2A des als Stirnzahnrad ausgebildeten zweiten Beschlagteiles 2. Die Außenverzahnung 2A ist die fünfte spezifische Teilkomponente, die in der vorliegenden Beschreibung genannt wird. Durch das Feinschneiden findet in der zugehörigen Scherzone SZ in vorteilhafter Weise eine lokale Verfestigung des Materialgefüges der Zähne Z2 der Außenverzahnung 2A des zweiten Beschlagteiles 2 statt. Zu der zu erreichenden Härte in Abhängigkeit des Abstandes von der Scherkante SK der Zähne Z2 der Außenverzahnung 2A wird später noch auf die Figuren 5A, 5B näher eingegangen.

Die Figuren 4A, 4B und 5A, 5D verdeutlichen noch einmal anhand von Abbildungen und zugehörigen Diagrammen, dass sowohl die Tragfähigkeit eines beispielhaft ausgewählten zweiten Beschlagteiles 2 insgesamt und in den lokalen Bearbeitungsbereichen B-n erhöht ist, als auch ein größeres Drehmoment über das verzahnte zweite Beschlagteil 2 übertragbar ist, da durch eine gezielte lokale Kaltverfestigung eines hochmanganhaltigen FeMn-Stahles in einem Feinschneidevorgang in Kombination mit einem Kaltumformschritt und in einem Feinschneidevorgang oder einem Kaltumformschritt allein hohe Bauteilsteifigkeiten erreicht werden können, die nachfolgend durch den jeweiligen physikalischen Wert der Härte HV 0,1 repräsentiert werden.

Figur 4B zeigt, ausgehend von Figur 4A einen Härteverlauf anhand einer ersten Kennlinie K1 in einem ersten Diagramm nach der erfindungsgemäßen Bearbeitung (hier Feinschneiden und Massivkaltumformung) des Grundwerkstoffs (hochmanganhaltiger FeMn-Stahl) des zweiten Kragenzuges 2C, ausgehend von der Stirnfläche 2C-1 des zweiten Kragenzuges 2C in axialer Richtung parallel zur Mittelachse des Beschlagteil-Rohlings gesehen.

Es wurden zehn Härtemessungen nach DIN EN ISO 6507-1 HV 0,1 - mit der Prüfkraft 0,9807N vorgenommen.

Es wird anhand des Diagramms [Härte HV 0,1 über einem Abstand A in mm von der Stirnfläche 2C-1 des zweiten Kragenzuges 2C] in Figur 4B deutlich, dass durch die Vorgänge Feinschneiden und Kragenziehen in einem Abstand A<0,1 mm von der Stirnfläche 2C-1 des zweiten Kragenzuges 2C eine Härte des zweiten Kragenzuges 2C zwischen 700 - 800 HV 0,1 erreicht wird.

Die Härte im Materialgefüge des zweiten Kragenzuges 2C nimmt gemäß dem Diagramm der Figur 4B in einem Abstand A=1 mm, von der Stirnfläche 2C-1 des zweiten Kragenzuges 2C ausgehend, bis auf 400 bis 500 HV 0,1 ab.

Das Diagramm 4B zeigt durch den dargestellten Härteverlauf das enorme Verfestigungspotential der gemäß der Beschreibung bearbeiteten hochmanganhaltigen FeMn-Stähle. Durch das beschriebene Feinschneiden und die Massivkaltumformung werden Härtewerte von bis zu 800 HV 0,1, gemäß Figur 4B insbesondere 750 HV 0,1 erreicht.

Figur 5B zeigt ausgehend von Figur 5A einen Härteverlauf nach der erfindungsgemäßen Bearbeitung (hier Feinschneiden) des Grundwerkstoffes (hochmanganhaltiger FeMn-Stahl) eines Zahnes Z2 der Außenverzahnung 2A, ausgehend von der Stirnfläche 2A-1 des Zahnes Z2 der Außenverzahnung 2A in radialer Richtung zur Mittelachse des Beschlagteil-Rohlings gesehen.

Eine zweite Kennlinie K2 und eine dritte Kennlinie K3 sind ausgehend von der Stirnfläche 2A-1 des Zahnes Z2 der Außenverzahnung 2A in radialer Richtung jeweils in einer unterschiedlichen Ebene innerhalb des Zahnes Z2 ermittelt.

Es wurden wiederum jeweils zehn Messungen nach DIN EN ISO 6507-1 HV 0,1 - mit der Prüfkraft 0,9807 N vorgenommen.

Es wird anhand der zweiten und dritten Kennlinie K2, K3 des Diagramms [Härte HV 0,1 über einem Abstand A in mm von der Stirnfläche 2A-1] in Figur 5B deutlich, dass durch den Feinschneidevorgang allein in einem Abstand A von der Stirnfläche 2A-1 von A=0,05 mm eine Härte des Zahnes Z2 beziehungsweise der Zähne Z2 der Außenverzahnung 2A von circa 500 bis 600 HV 0,1 erreicht wird.

Die Härte im Materialgefüge eines Zahnes Z2 beziehungsweise der Zähne Z2 der Außenverzahnung 2A nimmt gemäß der zweiten und dritten Kennlinie K2, K3 im Diagramm der Figur 5B in einem Abstand A=1,2 mm von Stirnfläche 2A-1 eines Zahnes Z2 der Außenverzahnung 2A bei beiden Härteverläufen bis auf circa 300 HV 0,1 ab.

Durch die Messung in zwei verschiedenen Höhen gemäß der zweiten und dritten Kennlinie K2, K3 des Diagramms der Figur 5B wird ferner nachgewiesen, dass die jeweilige Härte in axialer Richtung bezogen auf die Mittelachse des Beschlagteiles 2A gesehen, im Wesentlichen die gleichen Werte annimmt. Das heißt, die Härte des jeweiligen Zahnes Z2 Außenverzahnung 2A nimmt in radialer Richtung ab. In axialer Richtung gesehen ist jedoch in dem jeweiligen Abstand A von der Stirnfläche 2A-1 des jeweiligen Zahnes Z2 gesehen eine konstante Härte zu verzeichnen. Der jeweilige Zahn Z2 ist durchgehärtet. Die jeweilige Härte liegt nicht nur im Randbereich vor, sondern wird in vorteilhafter Weise im Inneren des jeweiligen Zahnes Z2 erreicht.

Wie erwähnt, wird somit die Härte im unverformten Grundwerkstoff von ca. 260 HV 0,1 bei der Herstellung der Außenverzahnung 2A des zweiten Beschlagteiles 2 im Feinschneideprozess derart bearbeitet, dass die Härte in dem fünften Bearbeitungsbereich B-25 allein durch das Feinschneiden auf mehr als das Doppelte (ca.550-600 HV 0,1) gesteigert wird.

Es versteht sich, dass die Verfahrensschritte von einem Beschlagteil 1 zum anderen 2 übertragbar sind. Das heißt, die Innenverzahnung 1A des Beschlagteiles 1 kann in der Art und Weise hergestellt werden, wie die Außenverzahnung 2A des zweites Beschlagteiles 2 und umgekehrt. Insofern stellen die anhand der beiden Beschlagteile beschriebenen Verfahrensabläufe nur Ausführungsbeispiele dar, die zur Erläuterung der Erfindung dienen.

Als Kaltumformungsverfahren, die wie zuvor erläutert in einzelnen Bearbeitungsbereichen B-n zur geometrischen und zur physikalischen Veränderung des Materialgefüges des hochmanganhaltigen FeMn-Stahles führen, wurde das Vorlochen, das Kragenziehen/das Domformen, das Durchsetzfügen und das Bördeln beziehungsweise das Freie Biegen genannt.

Zusätzlich wurde ein Hohlrad 1 und ein Stirnrad 2 mit geringer Materialdicke in einem einzigen Tiefziehvorgang innerhalb eines weiteren Kaltumformungsverfahrens dem Tiefziehen hergestellt. Die beschriebenen lokalen Bearbeitungsbereiche B-11, B-12, B-13 des Hohlrades 1 und die beschriebenen lokalen Bearbeitungsbereiche B-24, B-25 des Stirnrades 2 wurden jeweils in einem einzigen Tiefziehvorgang ausgeformt, durch Kaltumformung verfestigt und untersucht. Es hat sich herausgestellt, das das Tiefziehen zur geometrischen Umwandlung und Verfestigung eines blechartigen Werkstückes (Rohling) aus hochmanganhaltigem FeMn-Stahl in ein Beschlagteil 1, 2 (Hohlrad 1 oder Stirnrad 2) zu den bereits beschriebenen Effekten im Materialgefüge des hochmanganhaltigen FeMn-Stahles führt. Es finden in den lokalen Bearbeitungsbereichen B-n auch bei der Kaltumformung durch Tiefziehen die beschriebenen physikalischen Veränderungen statt, die neben der eigentlichen Umformung eine gewünschte Verfestigung des Materialgefüges bewirken.

### Bezugszeichenliste

- 100: Verstelleinrichtung (Sitzversteller/Beschlag)
- 1: erstes Beschlagteil
- 2: zweites Beschlagteil
- 1A: Innenverzahnung
- 1A': Sekundärverzahnung
- 1B: erste Adapterplatte
- 2A: Außenverzahnung
- 2A-1: Stirnfläche eines Zahnes Z2 der Außenverzahnung
- 2B: zweite Adapterplatte
- 1C: erster Kragenzug (Dom)
- 1D: Sicke
- 2C: zweiter Kragenzug
- 100: Verstelleinrichtung
- Z1: Zahn/Zähne der Innenverzahnung 1A
- Z1': Zahn/Zähne der Sekundärverzahnung 1A'
- Z2: Zahn/Zähne der Außenverzahnung 2A
- B-n: lokaler Bearbeitungsbereich
- B-11: erster lokaler Bearbeitungsbereich
- B-12: zweiter lokaler Bearbeitungsbereich
- B-13: dritter lokaler Bearbeitungsbereich
- B-24: vierter lokaler Bearbeitungsbereich
- B-25: fünfter lokaler Bearbeitungsbereich
- V: Vorderseite
- R: Rückseite
- SK: Schneidkante (Feinschneiden)
- SZ: Scherzone (Feinschneiden)
- ZK: Ziehkante (Kragenziehen)
- FZ: Fügezone (Durchsetzfügen)
- K1: erste Kennlinie
- K2: zweite Kennlinie
- K3: dritte Kennlinie
- y1: erste Höhe
- y2: zweite Höhe

## Patentansprüche

1. Verfahren zur Herstellung einer Verstelleinrichtung für einen Fahrzeugsitz, die mindestens ein aus einem hochmanganhaltigen Stahl bestehendes Beschlagteil (1, 2) umfasst, wobei das Materialgefüge des mindestens einen Beschlagteiles (1, 2) unter gleichzeitiger Ausbildung mindestens einer spezifischen Teilkomponente des mindestens einen Beschlagteiles (1, 2) bearbeitet und lokal verfestigt wird, **dadurch gekennzeichnet, dass** das Materialgefüge mindestens einer Verzahnung (1A, 1A', 2A) des Beschlagteiles (1, 2) durch einen Kaltumformungsvorgang oder durch einen Feinschneidevorgang bearbeitet und lokal verfestigt wird, oder das Materialgefüge der mindestens einen Verzahnung (1A, 1A', 2A) des Beschlagteiles (1, 2) und/oder das Materialgefüge des mindestens einen Kragenzuges (1C, 2C) durch einen kombinierten Feinschneide- und Kaltumformungsvorgang bearbeitet und lokal verfestigt wird.

2. Verfahren nach Anspruch 1, **dadurch gekennzeichnet, dass** ein oberer Rand des parallel zur Längsachse des jeweiligen Beschlagteiles (1, 2) durch den kombinierten Feinschneide- und Kaltumformungsvorgang in dem jeweiligen Bearbeitungsbereich (B-n) ausgeformten mindestens einen Kragenzuges (1C, 2C) durch einen weiteren Kaltumformungsvorgang nach außen oder innen winklig gestellt wird, wobei durch die im Randbereich während des weiteren Kaltumformungsvorgangs gebildete neue geometrische Form des Randes und durch die Veränderung des Materialgefüges im geometrisch veränderten Rand eine zusätzliche lokale Verfestigung des mindestens einen Kragenzuges (1C, 2C) vorgenommen wird.

3. Verfahren nach Anspruch 1, **dadurch gekennzeichnet, dass** eine Innenverzahnung (1A) und/oder eine Außenverzahnung (1A', 2A) kalt umgeformt oder feingeschnitten oder feingeschnitten und kalt umgeformt und damit in dem zugehörigen Bearbeitungsbereich (B-n) lokal verfestigt wird.

4. Verstelleinrichtung für einen Fahrzeugsitz, welche mindestens ein aus einem hochmanganhaltigen Stahl bestehendes Beschlagteil (1, 2) umfasst, **dadurch gekennzeichnet, dass** das Materialgefüge des mindestens einen Beschlagteiles (1, 2) eine lokal verfestigte Verzahnung (1A, 1A', 2A) aufweist, die durch einen Kaltumformungsvorgang oder durch einen Feinschneidevorgang bearbeitet ist, oder dass das Materialgefüge des mindestens einen Beschlagteiles (1, 2) eine lokal verfestigte Verzahnung (1A, 1A', 2A) und/oder mindestens einen Kragenzug (1C, 2C) aufweist, der durch einen kombinierten Feinschneide- und Kaltumformungsvorgang bearbeitet und lokal verfestigt ist.

5. Verstelleinrichtung nach Anspruch 4, **dadurch gekennzeichnet, dass** die mindestens eine lokal verfestigte Verzahnung (1A, 1A', 2A) des Beschlagteiles (1, 2) eine Innenverzahnung (1A) und/oder eine Außenverzahnung (1A', 2A) ist.

6. Verstelleinrichtung nach Anspruch 4, **dadurch gekennzeichnet, dass** ein oberer Rand des parallel zur Längsachse des jeweiligen Beschlagteiles (1, 2) durch den kombinierten Feinschneide- und Kaltumformungsvorgang in dem jeweiligen Bearbeitungsbereich (B-n) ausgeformten mindestens einen Kragenzug (1C, 2C) durch einen weiteren Kaltumformungsvorgang nach außen oder innen winklig gestellt ist, wobei die im Randbereich während des Kaltumformungsvorgangs gebildete neue geometrische Form des Randes und die Veränderung des Materialgefüges im geometrisch veränderten Rand eine zusätzliche lokale Verfestigung des mindestens einen Kragenzuges (1C, 2C) bewirkt.

## Claims

1. Method for producing an adjusting device for a vehicle seat, said adjusting device comprising at least one fitting part (1, 2) made of a high-manganese steel, wherein the material structure of the at least one fitting part (1, 2) is processed, with simultaneous formation of at least one specific subcomponent of the at least one fitting part (1, 2), and locally strain-hardened, **characterized in that** the material structure of at least one toothing (1A, 1A', 2A) of the fitting part (1, 2) is processed by a cold-forming operation or by a fine-blanking operation and locally strain-hardened, or the material structure of the at least one toothing (1A, 1A', 2A) of the fitting part (1, 2) and/or the material structure of the at least one collar (1C, 2C) is processed by a combined fine-blanking and cold-forming operation and locally strain-hardened.

2. Method according to Claim 1, **characterized in that** an upper periphery of the at least one collar (1C, 2C) formed parallel to the longitudinal axis of the respective fitting part (1, 2) by the combined fine-blanking and cold-forming operation in the respective processing region (B-n) is set at an angle towards the outside or inside by a further cold-forming operation, wherein, as a result of the new geometric shape, formed in the peripheral region during the further cold-forming operation, of the periphery and as a result of the change in the material structure in the geometrically changed periphery, additional local strain-hardening of the at least one collar (1C, 2C) is carried out.

3. Method according to Claim 1, **characterized in that** an internal toothing (1A) and/or an external toothing (1A', 2A) is cold formed or fine blanked or fine blanked and cold formed and thus locally strain-hardened in the associated processing region (B-n).

4. Adjusting device for a vehicle seat, said adjusting device comprising at least one fitting part (1, 2) made of a high-manganese steel, **characterized in that** the material structure of the at least one fitting part (1, 2) has a locally strain-hardened toothing (1A, 1A', 2A) which has been processed by a cold-forming operation or by a fine-blanking operation, or **in that** the material structure of the at least one fitting part (1, 2) has a locally strain-hardened toothing (1A, 1A', 2A) and/or at least one collar (1C, 2C) which has been processed by a combined fine-blanking and cold-forming operation and locally strain-hardened.

5. Adjusting device according to Claim 4, **characterized in that** the at least one locally strain-hardened toothing (1A, 1A', 2A) of the fitting part (1, 2) is an internal toothing (1A) and/or an external toothing (1A', 2A).

6. Adjusting device according to Claim 4, **characterized in that** an upper periphery of the at least one collar (1C, 2C) formed parallel to the longitudinal axis of the respective fitting part (1, 2) by the combined fine-blanking and cold-forming operation in the respective processing region (B-n) has been set at an angle towards the outside or inside by a further cold-forming operation, wherein the new geometric shape, formed in the peripheral region during the cold-forming operation, of the periphery and the change in the material structure in the geometrically changed periphery, bring about additional local strain-hardening of the at least one collar (1C, 2C).

## Revendications

1. Procédé de fabrication d'un dispositif de réglage pour un siège de véhicule, qui comprend au moins une partie de ferrure (1, 2) se composant d'acier à forte teneur en manganèse, la structure de matériau de l'au moins une partie de ferrure (1, 2) étant traitée et solidifiée localement en réalisant simultanément au moins un composant partiel spécifique de l'au moins une partie de ferrure (1, 2), **caractérisé en ce que** la structure de matériau d'au moins une denture (1A, 1A', 2A) de la partie de ferrure (1, 2) est traitée et solidifiée localement par une opération de façonnage à froid ou par une opération de découpage fin, ou la structure de matériau de l'au moins une denture (1A, 1A', 2A) de la partie de ferrure (1, 2) et/ou la structure de matériau de l'au moins une section de collet (1C, 2C) sont traitées et solidifiées localement par une opération combinée de découpage fin et de façonnage à froid.

2. Procédé selon la revendication 1, **caractérisé en ce qu'**un bord supérieur de l'au moins une section de collet (1C, 2C) façonnée parallèlement à l'axe longitudinal de la partie de ferrure respective (1, 2) par l'opération combinée de découpage fin et de façonnage à froid dans la région de traitement respective (B-n) est incliné vers l'extérieur ou vers l'intérieur par une opération de façonnage à froid supplémentaire, une solidification locale supplémentaire de l'au moins une section de collet (1C, 2C) étant effectuée par la nouvelle forme géométrique du bord formée dans la région de bord pendant l'opération de façonnage à froid supplémentaire et par la modification de la structure de matériau dans le bord dont la géométrie a été modifiée.

3. Procédé selon la revendication 1, **caractérisé en ce qu'**une denture intérieure (1A) et/ou une denture extérieure (1A', 2A) sont façonnées à froid ou sont soumises à un découpage fin ou sont soumises à un découpage fin et son façonnées à froid et sont ainsi solidifiées localement dans la région de traitement associée (B-n).

4. Dispositif de réglage pour un siège de véhicule, qui comprend au moins une partie de ferrure (1, 2) constituée d'un acier à haute teneur en manganèse, **caractérisé en ce que** la structure de matériau de l'au moins une partie de ferrure (1, 2) présente une denture solidifiée localement (1A, 1A', 2A) qui est traitée par une opération de façonnage à froid ou par une opération de découpage fin, ou **en ce que** la structure de matériau de l'au moins une partie de ferrure (1, 2) présente une denture solidifiée localement (1A, 1A', 2A) et/ou au moins une section de collet (1C, 2C) qui est traitée et solidifiée localement par une opération combinée de découpage fin et de façonnage à froid.

5. Dispositif de réglage selon la revendication 4, **caractérisé en ce que** l'au moins une denture solidifiée localement (1A, 1A', 2A) de la partie de ferrure (1, 2) est une denture intérieure (1A) et/ou une denture extérieure (1A', 2A).

6. Dispositif de réglage selon la revendication 4, **caractérisé en ce qu'**un bord supérieur de l'au moins une section de collet (1C, 2C) formée parallèlement à l'axe longitudinal de la partie de ferrure respective (1, 2) par l'opération combinée de découpage fin et de façonnage à froid dans la région de traitement respective (B-n) est incliné vers l'extérieur ou vers l'intérieur par une opération de façonnage à froid supplémentaire, la nouvelle forme géométrique du bord formé dans la région du bord pendant l'opération de façonnage à froid et la modification de la structure de matériau dans le bord dont la géométrie a été modifiée provoquant une solidification locale supplémentaire de l'au moins une section de collet (1C, 2C).
